# EUROPEAN PATENT APPLICATION

(11) **EP 4 734 025 A1**
(43) Date of publication of application: **29.04.2026**
(21) Application number: 25209819.9
(22) Date of filing: 20.10.2025
(51) Int. Cl.: G06Q 10/20, B66B 5/00

(54) **DISTRIBUTED PEOPLE MOVER SYSTEM CONFIGURED TO DENTIFY SOLUTIONS TO TECHNICAL OPERATIONAL ISSUES USING NATURAL LANGUAGE INPUT AND ACCUMULATED DATA**

(30) Priority: 24.10.2024 IN 202411081135
(71) Applicant: Otis Elevator Company, Farmington, Connecticut 06032 (US)
(72) Inventor: Marpu, Appala Raju, 500081 Hyderabad, Telangana (IN); Prakash, Vikram Jothy, 500081 Hyderabad, Telangana (IN)
(74) Representative: Schmitt-Nilson Schraud Waibel Wohlfrom Patentanwälte Partnerschaft mbB

(57) **Abstract**

A system having: devices, each having a device controller and a sensor operationally couped to the device controller, the device controller transmits telemetry data including sensor data over a first communication channel; a system controller module that receives the telemetry data and apply the telemetry data as input to a generative AI model; a mobile device that communicates with the system controller module over a second communication channel to submit a query for an operational condition report; and wherein the system controller module that applies the query to the generative AI model as further input and to receive a report from the generative AI model in response to the query, the report includes identifying an occurrence of an alert condition for one or more of the devices having technical operational parameters outside of a threshold from processing the telemetry data, and forwarding the report to the mobile device.

## Description

The embodiments relate to a distributed people mover system and more specifically to a distributed people mover system that is configured to identify a solution to a technical operational issue using natural language input and accumulated data.

It may often be a challenge for a technician to identify solutions to technical operational issues in the field. This can cause delays and lead to assessment errors, resulting in additional downtime for the affected devices.

Disclosed is a system configured for generating operational condition reports, including: a plurality of devices, each having a device controller and a sensor operationally couped to the device controller, wherein the device controller is configured to transmit telemetry data including sensor data over a first communication channel; a system controller module configured to receive the telemetry data and apply the telemetry data as input to a generative AI model; a mobile device configured to communicate with the system controller module over a second communication channel to submit a query for an operational condition report; and wherein the system controller module is configured to apply the query to the generative AI model as further input and to receive a report from the generative AI model in response to the query, wherein the report includes identifying an occurrence of an alert condition for one or more of the devices having technical operational parameters outside of a threshold from processing the telemetry data, and forwarding the report to the mobile device.

Particular embodiments further may include at least one, or a plurality of, the following optional features, alone or in combination with each other:

In addition to one or more aspects of the system or as an alternate, the generative AI model is configured to apply natural language processing to respond to queries presented in a natural language format.

In addition to one or more aspects of the system or as an alternate, the generative AI model is configured to process video, audio and text integrated into the query when generating the report.

In addition to one or more aspects of the system or as an alternate, the generative AI model is trained on data including one or more of commissioning data, heartbeat data, code version update data and maintenance data.

In addition to one or more aspects of the system or as an alternate, upon identifying the alert condition, the system controller module is configured to transmit responsive operational instructions to one or more of the devices.

In addition to one or more aspects of the system or as an alternate, the sensor includes one or more of a speed sensor, a vibration sensor, a load sensor, a door operation sensor and a health sensor.

In addition to one or more aspects of the system or as an alternate, the health sensor is configured to sense a mechanical failure in one or more of the devices.

In addition to one or more aspects of the system or as an alternate, the first communication channel is a wired or wireless channel and the second communication channel is a wireless channel that is the same as or different form the first communication channel.

In addition to one or more aspects of the system or as an alternate, the plurality of devices are people movers.

In addition to one or more aspects of the system or as an alternate, the plurality of devices are one or more of elevator cars, moving platforms and escalators.

Disclosed is a method of generating operational condition reports, including: receiving over a first communication channel, by a system controller module from a plurality of devices, each having a device controller and a sensor operationally couped to the device controller, telemetry data including sensor data; applying, by the system controller module, the telemetry data and as input to a generative AI model; receiving, by the system controller module from a mobile device over a second communication channel, a query for an operational condition report; applying, by the system controller module, the query to the generative AI model as further input to the generative AI model and receiving from the generative AI model a report in response to the query, the report identifying an occurrence of an alert condition for one or more of the devices having technical operational parameters outside of a threshold; and forwarding, by the system controller module, the report to the mobile device over the second communication channel.

Particular embodiments further may include at least one, or a plurality of, the following optional features, alone or in combination with each other:

In addition to one or more aspects of the method or as an alternate, the method includes applying, by the generative AI model, natural language processing to respond to queries presented in a natural language format.

In addition to one or more aspects of the method or as an alternate, the method includes processing, by the generative AI model, video, audio and text integrated into the query when generating the report.

In addition to one or more aspects of the method or as an alternate, the method includes training the generative AI model on data including one or more of commissioning data, heartbeat data, code version update data and maintenance data.

In addition to one or more aspects of the method or as an alternate, the method includes transmitting, by the system controller module upon identifying the alert condition, responsive operational instructions to one or more of the devices.

In addition to one or more aspects of the method or as an alternate, the sensor includes one or more of a speed sensor, a vibration sensor, a load sensor, a door operation sensor and a health sensor.

In addition to one or more aspects of the method or as an alternate, the health sensor is configured to detect a mechanical failure in one or more of the devices.

In addition to one or more aspects of the method or as an alternate, the first communication channel is a wired or wireless channel and the second communication channel is a wireless channel that is the same as or different form the first communication channel.

In addition to one or more aspects of the method or as an alternate, the plurality of devices are people movers.

In addition to one or more aspects of the method or as an alternate, the plurality of devices are one or more of elevator cars, moving platforms and escalators.

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2 shows a distributed system according to the embodiments that is configured to identify a solution to a technical operational issue using natural language input and accumulated data; and
FIGS. 3 shows a flowchart of a method of generating operational condition reports.

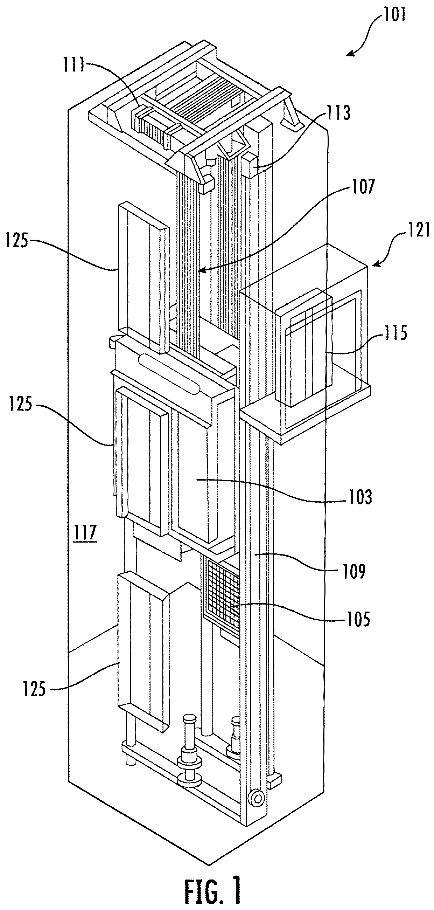

FIG. 1 is a perspective view of an elevator system 101 including an elevator car 103, a counterweight 105, a tension member 107, a guide rail (or rail system) 109, a machine (or machine system) 111, a position reference system 113, and an electronic elevator controller (controller) 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft (or hoistway) 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 may be located, as shown, in a controller room 121 of the elevator shaft 117 and is configured to control the operation of the elevator system 101, and particularly the elevator car 103. It is to be appreciated that the controller 115 need not be in the controller room 121 but may be in the hoistway or other location in the elevator system. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. Embodiments may also be employed in ropeless elevator systems using self-propelled elevator cars (e.g., elevator cars equipped with friction wheels, pinch wheels or traction wheels). FIG. 1 is merely a non-limiting example presented for illustrative and explanatory purposes.

In other embodiments, the system comprises a conveyance system that moves passengers between floors and/or along a single floor. Such conveyance systems may include escalators, people movers, etc. Accordingly, embodiments described herein are not limited to elevator systems, such as that shown in Figure 1. In one example, embodiments disclosed herein may be applicable conveyance systems such as an elevator system 101 and a conveyance apparatus of the conveyance system such as an elevator car 103 of the elevator system 101. In another example, embodiments disclosed herein may be applicable conveyance systems such as an escalator system and a conveyance apparatus of the conveyance system such as a moving stair of the escalator system and/or a moving walkway system.

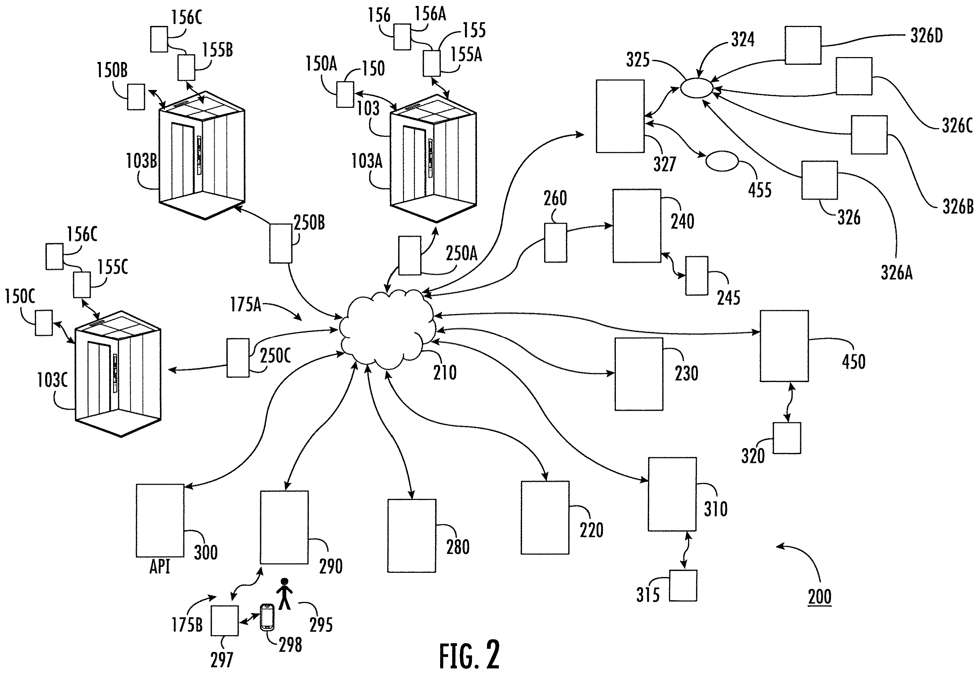

Turning to FIG. 2, disclosed is a distributed (e.g., cloud) system 200. While various modules are illustrated for performing discrete functions in FIG. 2, it is to be appreciated that two or more of the functions may be combined into a common module or alternatively the functions may be further divided into additional modules.

The system 200 includes a network 210 which may be a wide area network such as the internet. Devices 103A-103C (generally 103), which may be elevator cars, escalators, moving walkways or the like, as nonlimiting embodiments, may be IoT (internet of things) devices, i.e., devices operationally coupled over the internet over a first communication channel 175A. The first communication channel 175 may utilize a wired channel, such as ethernet, or a wireless channel, e.g., a wide area network or a cellular network, discussed in greater detail below. Each of the devices 103 may have a device controller 150A-150C (generally 150) and a sensor 155A-155C (generally 155) configured to transmit sensor data 156A-156C (generally 156). The sensor 155 may include one or more of a speed sensor, a vibration sensor, a load sensor, an accelerometer, a door operation sensor and a health sensor, e.g., that is configured to sense a mechanical failure of the device 103. The system may include additional sensors-the foregoing list should not be viewed as limiting.

The system 200 may have a controller module (or service) 220, an IoT central module 230 or similar platform, and an IoT application and data storage module 240 (for simplicity an application module or an IoT app module 240). The IoT central module 230 is a known IoT application platform as a service (aPaaS) with user-engageable dashboards that centralizes device data, allows for data-driven workflows, and the creation of custom apps.

IoT app module 240 is utilized for storage and other processes running in a cloud service. The message come from the devices 103 (e.g., in a raw format or as processed data, as nonlimiting examples) and are extracted, transformed into a readable/storable format and loaded onto databases for the front end applications to consume and publish. The controller module 220 instructs the IoT central module 230 to register the devices 103 with the IoT app module 240 to enable the IoT app module 240 to receive telemetry data 250A-250C (generally 250), which include the sensor data 156, from the devices 103 and to transmit code 260, such as updates, to the devices 103. The devices 103 may also interact in other ways with each other and the cloud, e.g., to request updates, voice communications, etc.

There may be hundreds of thousands of the devices 103, each sending production (e.g., actual) telemetry data 250 to the IoT app module 240, each message related to different aspects of the devices 103, such as the operational condition of the breaks, doors, etc., throughout the day.

The IoT app module 240 may generate logs 245, daily, indicative of received telemetry data 250 and transmitted code 260. A monitor and capture metrics module (for simplicity, a monitoring module) 280 may monitor the logs generated by the IoT app module 240. The logs 245 may be forwarded to a metrics storage module 310 where telemetry metrics data 315 is derived from the logs 245. A query module 450 may generate reports 320 from the telemetry metrics data 315, which may be viewable via an interactive performance dashboard 297, accessible via a web interface module 290, e.g., on a mobile phone 298 as a nonlimiting embodiment. With this configuration, errors in the communications can be identified by a user 295 who may be a technician. The user may engage an API module (or gateway) 300 to engage the controller module 220. The mobile phone 298 may communicate with, e.g., the controller 220, over a second communication channel 175B which may be a cellular network or a wide area network.

More specifically, the figure shows the user 295 that engages the web interface module 290 to communicate with the controller module 220 via the API module 300 and to view the performance dashboard 297, e.g., on their mobile phone 298. The IoT central module 230 is shown that registers the devices 103 with the IoT app module 240. The registration establishes trust in device connectivity and allows messages to traverse between devices and the cloud in both directions, i.e., device to cloud and cloud to device, according to predefined load scenarios. The monitoring module 280 may monitor telemetry logs 245 generated by the IoT app module 240. The query module 450 generates telemetry metrics data 315 and reports 320 from the telemetry metrics data 315, which may be stored on the metrics storage module 310 and visualized on a performance dashboard 297 over the web interface module 290 to identify errors logged over the past day (as an example) at the IoT app module 240.

According to the embodiments, a machine learning model (MLM) 325 (generally referred to as a neural network model or a generative AI model 324), may be within an AI module 327 or located in one of the other identified modules, and for example, utilized to generate the reports 320. The MLM 325 may be engaged by the user 295, utilizing natural language, when requesting a report, e.g., seeking a solution to a technical operational issue related to operation of the devices 103. In response, the MLM 325 may provide recommendations on remedying issues identified in the telemetry logs 245, e.g., based on accumulated data utilized to train the MLM 325.

As can be appreciated, the MLM 325, may be in a learning mode (training mode), where it is training on datasets, such as obtained from the sensor data 156 or other data identified below. In this mode, the MLM 325 learns patterns and relationships within the data to make accurate predictions or decisions. In this mode, the parameters of the MLM 325 are adjusted based on the input data and the desired output. In a production mode (inference mode), once the MLM 325 is trained and validated, and is deployed, the MLM 325 uses the learned parameters to make predictions on new, unseen data, and provides real-time or batch predictions to end-users or other systems.

Sources of information for the learning mode of the MLM 325 may include data 326, including device maintenance data 326A, e.g., obtained from mechanics engaging apps on their phones 298 that transmit relevant data to the controller module 220. The data 326 may include code download (e.g., update) data 326B, e.g. obtained from the IoT app module 240. The data 326 may include heartbeat data 326C from the telemetry data 250 including performance, alarms and event data. The data 326 may also include initial commissioning data 326D, e.g., obtained from the IoT central module 230 when registering the device 103.

Similarly, according to the embodiments, the AI module 327, or e.g., the query module 450, may be equipped with a large language model (LLM) 455 as another generative AI model 324. The LLM 455 may be trained using typical techniques, e.g., collecting and processing datasets that are relevant to the operation of the devices 103, applying a model architecture such as transformers which can handle long-range dependencies in text, applying hyperparameter tuning to the training data batches to adjust the size and configuration of the training data, applying optimization technique to improve accuracy, and thereafter iteratively tuning the LLM 455. The LLM 455 may be trained to respond to technicians 295 who submit queries, e.g., to the controller module 220, for reports 320 about the current, historical, and predictable (e.g., statistically) future operational conditions of the system 200. That is, while the MLM 325 may be utilized to identify technical operational issues in the system 200 and recommend solutions, the LLM 455 may be utilized to enable a communication exchange with a technician 295 utilizing natural language.

It is to be appreciated that the MLM 325 may be trained to respond to natural language input without the need for a separate LLM 455, e.g., utilizing natural language processing (NLP). NPL is a subfield of machine learning focused on the interaction between computers and human language.

According to the embodiments, where the devices 103 are elevator cars, the trained generative AI model 324 may be able to respond to queries such as "how many trapped passenger cases were reported in the Europe, the Middle East and Africa (EMEA) region during the last year?" Another query that the model 324 may be above to resolve includes "how many elevator cars will require maintenance in the next six months in the EMEA region?" Yet another query that the model 324 may be above to resolve includes "what are the most common technical alert conditions for elevator cars in the EMEA region and how are they addressed?" A more specific query could be "how many elevator cars in the EMEA experiencing noise above a (predetermined) level, and what is the likely cause and fix?" Yet further, when addressing a particular elevator car, a query that the model 324 may be above to resolve includes "how do we fix a door motion issue for elevator car number (xxx) located at (yyyy), where the issue presents as (zzz)."

It can be appreciated that, with the disclosed embodiments, technicians 295 can type their queries in the natural language into their phones 298 (or other mobile device), and the system 200 will provide an answer based on amassed data that is processed by the generative AI model 324. The system 200 enables the saving of time and effort, and provides more accurate and reliable solutions to the technicians 295.

As indicated, while various modules are illustrated for performing discrete functions in FIG. 2, it is to be appreciated that two or more of the functions may be combined into a common module or alternatively the functions may be further divided into additional modules. As such reference to the controller module 220 herein may implicate functions described as applicable to the controller module 220 or other modules.

It is to be further appreciated that the utilization of the distributed cloud system is not intended on limiting the scope of the embodiments. That is, the mobile device 298 of the technician 295 may be configured to perform the processes identified herein as being performed over the distributed system. This would be useful in situations where, for example, the mobile device 298, in possession of the technician 295, is in a location where it cannot obtain a signal to communicate with the other components of the distributed system 200. Having the mobile device 298 equipped to perform operations identified as being performed over the distributed system would also avoid latency issues associated with communication exchanges over a network.

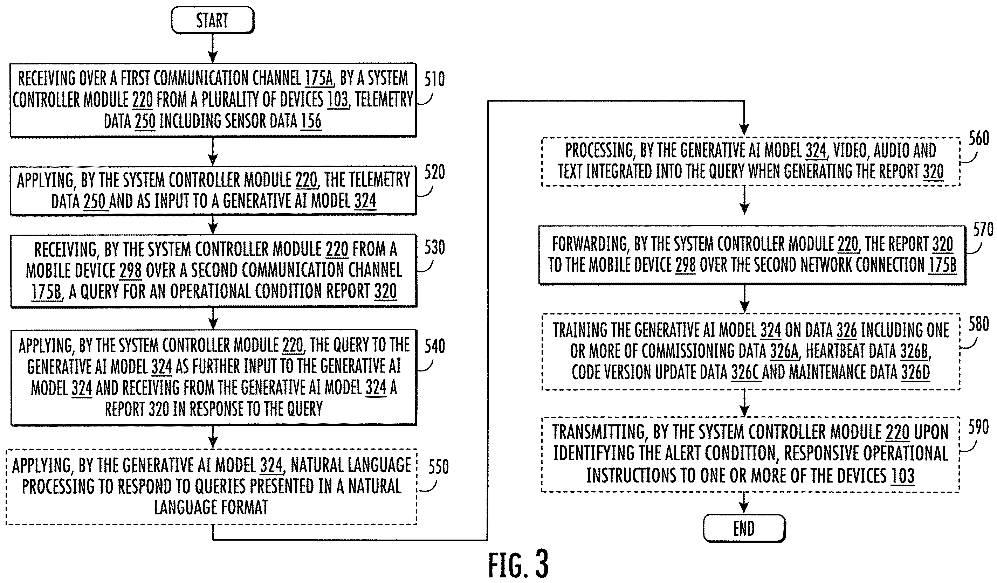

Turning to FIG. 3, a flowchart shows a method of generating operational condition reports 320. Boxes in dashed lines in the flowchart represent further explanations of one or more preceding steps and are not intended on limiting the scope of the embodiments.

As shown in block 510, the method includes receiving over a first communication channel 175A, by a system controller module 220 from a plurality of devices 103, each having a device controller 150 and a sensor 155 operationally couped to the device controller 150, telemetry data 250 including sensor data 156. As shown in block 520, the method includes applying, by the system controller module 220, the telemetry data 250 and as input to a generative AI model 324. As shown in block 530, the method includes receiving, by the system controller module 220 from a mobile device 298 over a second communication channel 175B, a query for an operational condition report 320.

As indicated, the first communication channel 175A is a wired or wireless channel and the second communication channel 175B is a wireless channel that is the same as or different form the first communication channel 175A.

As shown in block 540, the method includes applying, by the system controller module 220, the query to the generative AI model 324 as further input to the generative AI model 324 and receiving from the generative AI model 324 a report 320 in response to the query, the report 320 identifying the occurrence of an alert condition for one or more of the devices 103 having technical operational parameters outside of a threshold. As shown in block 550, the method includes applying, by the generative AI model 324, natural language processing to respond to queries presented in a natural language format. As shown in block 560, the method includes processing, by the generative AI model 324, video, audio and text integrated into the query when generating the report 320. As shown in block 570, the method includes forwarding, by the system controller module 220, the report 320 to the mobile device 298 over the second network channel 175B. As shown in block 580, the method includes training the generative AI model 324 on data 326 including one or more of commissioning data 326A, heartbeat data 326B, code version update data 326C and maintenance data 326D. As shown in block 590, the method includes transmitting, by the system controller module 220 upon identifying the alert condition, responsive operational instructions to one or more of the devices 103. In the case of an elevator car 103, such instructions may be to continue to a specific floor, stop at the floor, open the doors, e.g., to let out passengers, and then stop service.

As indicated, the sensor 155 includes one or more of a speed sensor, a vibration sensor, a load sensor, a door operation sensor and a health sensor. As indicated, the health sensor 155 is configured to detect a mechanical failure of the elevator car 103. As indicated, the plurality of devices 103 are people movers. As also indicated, the plurality of devices 103 are one or more of elevator cars, moving platforms and escalators.

Regarding the implementation of artificial intelligence (AI) identified herein, expressly or inherently, a machine learning model, e.g., part of an artificial intelligence (AI) system, may be utilized in the embodiments. An AI system simulates human intelligence using a digital computer or a machine controlled by a digital computer, senses the environment, e.g., using available sensors including speed, acceleration, vibration, sound, video and the like, and acquires knowledge and uses the knowledge to obtain the optimum results. The AI infrastructure includes technologies such as the sensors, dedicated artificial intelligence chips, cloud computing, distributed storage, big data processing technologies, operation/interaction systems, mechatronics, and the like. Some implementations of AI according to the embodiments utilize computer vision technology, a voice processing technology, a natural language processing technology, machine learning/deep learning and the like.

Some implementations of AI according to the embodiments utilize pre-trained (PT) machine translation models that adopt a sequence-to-sequence (sequence-sequence or S-S) framework based on a neural network. The S-S framework is a framework including an encoder-decoder structure. The encode-decoder structure converts an input sequence into another sequence output. In this framework, the encoder converts the input sequence into vectors, and the decoder accepts the vectors and generates the output sequence in time order. The encoder and the decoder may utilize the same type of neural network model, or may utilize different types of neural network models. The neural network model may be a CNN (Convolutional Neural network) model, an RNN (redundant Neural network) model, a long-short-term memory (LSTM) model, a delay network model, a gated CNN model, or the like.

The trained machine learning models, once trained, can analyze the input data, and in one or more aspects, predict and/or characterize features included in the sensed data. In the case of video, in one non-limiting example, the sensed data can include sequential images and/or encoded video data (e.g., using digital video file/stream formats and/or codecs, such as MP4, MOV, AVI, WEBM, AVCHD, OGG, and/or the like including combinations and/or multiples thereof). The prediction and/or characterization of the features can include segmenting the video data. In some instances, the one or more trained machine learning models include or are associated with a preprocessing or augmentation (e.g., intensity normalization, resizing, cropping, and/or the like including combinations and/or multiples thereof) that is performed prior to segmenting the video data. An output of the one or more trained machine learning models can include a prediction of aspects of the video data, a location and/or position of the aspects within the video data, and/or state of the aspects. The location can be a set of coordinates in an image/frame in the video data. The trained machine learning models, in one or more examples, are trained to perform higher-level predictions and tracking.

Similar predictions can be made with regard to the operational state of a device by analyzing sensor data captured while the device is utilized and applying the data to trained machine learning models. For example, utilizing a serviced learning technique, the model is trained on known inputs and outputs from legacy events to predict future outputs from future inputs. The models may be evaluated so that variables may be weighted or re-weighted to more accurately correlate inputs and outputs, and the model may be re-retrained as more inputs and outputs are collected. For example, the prediction of a state of multiple devices of an operationally integrated system of devices may be obtained utilizing a trained model. Data may be captured, including operational sounds, vibrations, etc., for one (or fewer than all) of the devices, and the captured data may be run through a trained model that is trained to identify the influence (constructive and destructive) that the devices have on each other in their respective operational states, including when they are functioning within and outside of acceptable tolerances.

Regarding telecommunication implementations identified herein, expressly or inherently, wireless connections identified above may apply protocols that include local area network (LAN, or WLAN for wireless LAN) protocols and/or a private area network (PAN) protocols. LAN protocols include WiFi technology, based on the Section 802.11 standards from the Institute of Electrical and Electronics Engineers (IEEE). PAN protocols include, for example, Bluetooth Low Energy (BTLE), which is a wireless technology standard designed and marketed by the Bluetooth Special Interest Group (SIG) for exchanging data over short distances using short-wavelength radio waves. PAN protocols also include Zigbee, a technology based on Section 802.15.4 protocols from the IEEE, representing a suite of high-level communication protocols used to create personal area networks with small, low-power digital radios for low-power low-bandwidth needs. Such protocols also include Z-Wave, which is a wireless communications protocol supported by the Z-Wave Alliance that uses a mesh network, applying low-energy radio waves to communicate between devices such as appliances, allowing for wireless control of the same.

Other applicable protocols include Low Power WAN (LPWAN), which is a wireless wide area network (WAN) designed to allow long-range communications at a low bit rates, to enable end devices to operate for extended periods of time (years) using battery power. Long Range WAN (LoRaWAN) is one type of LPWAN maintained by the LoRa Alliance, and is a media access control (MAC) layer protocol for transferring management and application messages between a network server and application server, respectively. Such wireless connections may also include radio-frequency identification (RFID) technology, used for communicating with an integrated chip (IC), e.g., on an RFID smartcard. In addition, Sub-1Ghz RF equipment operates in the ISM (industrial, scientific and medical) spectrum bands below Sub 1Ghz - typically in the 769 - 935 MHz, 315 Mhz and the 468 Mhz frequency range. This spectrum band below 1Ghz is particularly useful for RF IOT (internet of things) applications. Other LPWAN-IOT technologies include narrowband internet of things (NB-IOT) and Category M1 internet of things (Cat M1-IOT). Wireless communications for the disclosed systems may include cellular, e.g. 2G/3G/4G (etc.). The above is not intended on limiting the scope of applicable wireless technologies.

Wired connections identified above may include connections (cables/interfaces) under RS (recommended standard)-422, also known as the TIA/EIA-422, which is a technical standard supported by the Telecommunications Industry Association (TIA) and which originated by the Electronic Industries Alliance (EIA) that specifies electrical characteristics of a digital signaling circuit. Wired connections may also include (cables/interfaces) under the RS-232 standard for serial communication transmission of data, which formally defines signals connecting between a DTE (data terminal equipment) such as a computer terminal, and a DCE (data circuit-terminating equipment or data communication equipment), such as a modem. Wired connections may also include connections (cables/interfaces) under the Modbus serial communications protocol, managed by the Modbus Organization. Modbus is a sever/client protocol designed for use with its programmable logic controllers (PLCs) and which is a commonly available means of connecting industrial electronic devices. Wireless connections may also include connectors (cables/interfaces) under the PROFibus (Process Field Bus) standard managed by PROFIBUS & PROFINET International (PI). PROFibus which is a standard for fieldbus communication in automation technology, openly published as part of IEC (International Electrotechnical Commission) 61158. Wired communications may also be over a Controller Area Network (CAN) bus. A CAN is a vehicle bus standard that allows microcontrollers and devices to communicate with each other in applications without a host computer. CAN is a message-based protocol released by the International Organization for Standards (ISO). The above is not intended on limiting the scope of applicable wired technologies.

As indicated, when data is transmitted over a network between end processors, the data may be transmitted in raw form or may be processed in whole or part at any one of the end processors or an intermediate processor, e.g., at a cloud service or other processor. The data may be parsed at any one of the processors, partially or completely processed or compiled, and may then be stitched together or maintained as separate packets of information.

Regarding computing technologies identified herein, expressly or inherently, each processor identified herein may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory identified herein may be but is not limited to a random access memory (RAM), read only memory (ROM), or other electronic, optical, magnetic or any other computer readable medium. Embodiments can be in the form of processor-implemented processes and devices for practicing those processes, such as processor. Embodiments can also be in the form of computer code based modules, e.g., computer program code (e.g., computer program product) containing instructions embodied in tangible media (e.g., non-transitory computer readable medium), such as floppy diskettes, CD ROMs, hard drives, on processor registers as firmware, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an device for practicing the exemplary embodiments. When implemented on a general-purpose microprocessor, the computer program code segments configure the microprocessor to create specific logic circuits.

The terminology used herein is for the purpose of describing particular embodiments only and is not intended to be limiting of the present disclosure. The term "about" is intended to include the degree of error associated with measurement of the particular quantity and/or manufacturing tolerances based upon the equipment available at the time of filing the application. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A system configured for generating operational condition reports, comprising:
a plurality of devices, each having a device controller and a sensor operationally couped to the device controller, wherein the device controller is configured to transmit telemetry data including sensor data over a first communication channel;
a system controller module configured to receive the telemetry data and apply the telemetry data as input to a generative AI model;
a mobile device configured to communicate with the system controller module over a second communication channel to submit a query for an operational condition report; and
wherein the system controller module is configured to apply the query to the generative AI model as a further input and to receive a report from the generative AI model in response to the query, wherein the report includes identifying an occurrence of an alert condition for one or more of the devices having technical operational parameters outside of a threshold from processing the telemetry data, and forwarding the report to the mobile device.

2. The system of claim 1, wherein the generative AI model is configured to apply natural language processing to respond to queries presented in a natural language format.

3. The system of claim 1 or 2, wherein the generative AI model is configured to process video, audio and text integrated into the query when generating the report.

4. The system of any of claims 1 to 3, wherein the generative AI model is trained on data including one or more of commissioning data, heartbeat data, code version update data and maintenance data.

5. The system of any of claims 1 to 4, wherein, upon identifying the alert condition, the system controller module is configured to transmit responsive operational instructions to one or more of the devices.

6. The system of any of claims 1 to 5, wherein the sensor includes one or more of a speed sensor, a vibration sensor, a load sensor, a door operation sensor and a health sensor.

7. The system of claim 6, wherein the health sensor is configured to sense a mechanical failure in one or more of the devices.

8. The system of any of claims 1 to 7, wherein the first communication channel is a wired or wireless channel and the second communication channel is a wireless channel that is the same as or different form the first communication channel.

9. The system of any of claims 1 to 8, wherein the plurality of devices are people movers.

10. The system of any of claims 1 to 9, wherein the plurality of devices are one or more of elevator cars, moving platforms and escalators.

11. A method of generating operational condition reports, comprising:
receiving over a first communication channel, by a system controller module from a plurality of devices, each having a device controller and a sensor operationally couped to the device controller, telemetry data including sensor data;
applying, by the system controller module, the telemetry data and as input to a generative AI model;
receiving, by the system controller module from a mobile device over a second communication channel, a query for an operational condition report;
applying, by the system controller module, the query to the generative AI model as further input to the generative AI model and receiving from the generative AI model a report in response to the query, the report identifying an occurrence of an alert condition for one or more of the devices having technical operational parameters outside of a threshold; and
forwarding, by the system controller module, the report to the mobile device over the second communication channel.

12. The method of claim 11, comprising applying, by the generative AI model, natural language processing to respond to queries presented in a natural language format; and/or
comprising processing, by the generative AI model, video, audio and text integrated into the query when generating the report; and/or
comprising training the generative AI model on data including one or more of commissioning data, heartbeat data, code version update data and maintenance data.

13. The method of claim 11 or 12, comprising transmitting, by the system controller module upon identifying the alert condition, responsive operational instructions to one or more of the devices; and/or
wherein the sensor includes one or more of a speed sensor, a vibration sensor, a load sensor, a door operation sensor and a health sensor; and/or
wherein the health sensor is configured to detect a mechanical failure in one or more of the devices.

14. The method of any of claims 11 to 13, wherein the first communication channel is a wired or wireless channel and the second communication channel is a wireless channel that is the same as or different form the first communication channel.

15. The method of any of claims 11 to 14, wherein the plurality of devices are people movers; and/or wherein the plurality of devices are one or more of elevator cars, moving platforms and escalators.
